# EUROPÄISCHE PATENTANMELDUNG

(11) **EP 4 741 363 A1**
(43) Veröffentlichungstag der Anmeldung: **13.05.2026**
(21) Anmeldenummer: 24212145.7
(22) Anmeldetag: 11.11.2024
(51) Int. Cl.: C04B 33/04, C04B 35/18

(54) **CHARGENBEHÄLTER FÜR KATHODENAKTIVMATERIALIEN**

(71) Anmelder: Steuler-KCH GmbH, 56203 Höhr-Grenzhausen (DE)
(72) Erfinder: SCHÄFER, Anna-Lena, 56626 Andernach (DE); KALB, Christopher, 56244 Freilingen (DE); SPERBER, Jens, 56237 Nauort (DE)
(74) Vertreter: dompatent

(57) **Zusammenfassung**

Verfahren zur Herstellung eines Chargenbehälters zum Kalzinieren von lithiumhaltigen Kathodenaktivmaterial erhältlich ein Verfahren mit durch das Formen und Sintern von
- 40 bis 70 MA.-% Andalusit
- 5 bis 20 MA.-% Tonerde
- 0 bis 25 MA.-% Schmelzmullit
- 0 bis 25 MA.-% Sinterspinell
- 0 bis 15 MA.-% weitere Mineralien
bei Temperaturen unterhalb von 1370 °C.

## Beschreibung

Die vorliegende Erfindung betrifft ein Verfahren zur Herstellung eines Chargenbehälters und den so erhältlichen Chargenbehälter.

Kathodenaktivmaterialien für Lithiumbatterien bestehen aus Lithiumionenzellen. Diese umfassen Anoden und Kathoden, wobei die Kathoden aus Lithiumübergangsmetallverbindungen bestehen.

Solche Verbindungen sind häufig Nickel-Mangan-Cobalt-Oxide und folgen der allgemeinen Formel Liₘ₋ₙ(Ni_{X}Mn_{Y}Co1_{-x-y})O₂.

Um diese Materialien zu erzeugen, werden sie aus einem Precursor Pulver und einer Lithiumquelle bei etwa 650 bis 1.000 °C kalziniert. Das kalzinierte Material wird dann in der Lithiumionenzelle verbaut.

Problematisch ist, dass die Behälter, in denen die Kalzinierung stattfindet, (Chargenbehälter) nach wenigen Zyklen ausgetauscht werden müssen, weil es zu Abplatzern am Chargenbehälter kommt, die dann an den Kathodenmaterialen anhafteten. Diese werden dadurch verunreinigt und sind von schlechter Qualität oder unbrauchbar.

Die Chargenbehälter müssen eine hohe Temperaturstabilität aufweisen und den Temperaturwechsel überstehen. Es gibt eine Vielzahl weiterer Anforderungen.

Obwohl eine Vielzahl von verschiedenen Chargenbehältern bekannt ist, besteht weiterhin Bedarf nach Chargenbehältern, die die Nachteile des Standes der Technik zumindest teilweise überwinden und beispielsweise eine höhere Zyklenzahl erlauben.

Gelöst wird die Aufgabe durch ein Verfahren zur Herstellung eines Chargenbehälters zum Kalzinieren von lithiumhaltigen Kathodenaktivmaterial durch das Formen und Sintern von
- 40 bis 70 MA.-% Andalusit
- 5 bis 20 MA.-% Tonerde
- 0 bis 25 MA.-% Schmelzmullit
- 0 bis 25 MA.-% Sinterspinell
- 0 bis 15 MA.-% weitere Mineralien
bei Temperaturen unterhalb von 1370 °C.

Erfindungsgemäß wird also ein Material bereitgestellt, das als Hauptkomponenten Andalusit und Tonerde enthält.

Andalusit ist ein Inselsilikat aus der Gruppe der Alumosilikate und hat die chemische Zusammensetzung Al₂[O|SiO₄]. Andalusit ist grundsätzlich auch in der Herstellung feuerfester Bau- und Werksstoffe bekannt, wird jedoch üblicherweise bei so hohen Temperaturen gebrannt, dass das Andalusit versintert wird und dabei in Mullit umgewandelt wird.

Bevorzugt liegt die Menge an Andalusit bei 45 bis 55 Ma-%. Eine geeignete Andalusit Korngröße ist < 0,5 mm gemessen als d50ᵥₒₗ.

d50ᵥₒₗ bedeutet, dass 50 % des Materials eine Korngröße größer als der entsprechende Wert aufweist und 50 % eine kleinere Korngröße. Solche Kornlinienverteilungen können durch Sieblinien ermittelt werden. Bevorzugt werden sie durch Laserbeugung gemessen und dann rechnerisch bestimmt.

Tonerde ist ein Mineral der allgemeinen Formel Al₂O₃. Tonerde kommt grundsätzlich in verschiedenen Kristallsystemen vor. Für den erfindungsgemäßen Chargenbehälter sind alle Formen geeignet.

Das Ausgangsmaterial für die Herstellung des Chargenbehälters kann weitere Substanzen enthalten.

Eine mögliche Substanz ist Schmelzmullit. Mullit ist ein Mineral aus der Gruppe der Silikate und Germanate und gehört zu den Inselsilikaten. Schmelzmullit hat dabei die Zusammensetzung von 2Al₂O₃·1SiO₂ und besitzt ein Glasphasenanteil. Schmelzmullit wird typischerweise durch Schmelzen einer Mischung von Kaolinit und Aluminiumoxid erstellt. Mullit wird als Bestandteil zur Herstellung von Porzellan, Ziegeln und Schamottsteinen verwendet.

Ein weiterer möglicher Bestandteil ist Sinterspinell. Spinelle sind Magnesiumaluminate. Sie haben die allgemeine Formel MgAl₂O₄. Sinterspinell wird aufgrund seiner hohen Härte und chemischen Beständigkeit sowie seines hohen Schmelzpunktes von 2135 °C für feuerfeste und gasdichte technische Keramiken verwendet. Geeignete Sinterspinelle sind beispielsweise in EP 3 458 430 B1 beschrieben.

Weiterhin kann der Chargenbehälter grundsätzlich weitere Mineralien umfassen. Beispiel hierfür sind Ton, Magnesit und Magnesiumoxid.

Ton meint in diesem Fall Schichtsilikate, die schichtartige Kristallstrukturen aus Silizium, Sauerstoff sowie gegebenenfalls Wasserstoff, Magnesium und Aluminium aufweisen.

Magnesit ist ein Mineral der allgemeinchemischen Zusammensetzung MgCO₃. Magnesit wird häufig zur Herstellung von feuerfesten Materialien verwendet.

Ein weiterer möglicher Bestandteil ist Magnesiumoxid. Magnesiumoxid wird auch in der Herstellung von feuerfesten Materialien verwendet.

Entscheidend bei dem erfindungsgemäßen Verfahren ist, das die Versinterungstemperatur relativ niedrig ist. Erfindungsgemäß liegt sie zumindest unterhalb von 1370 °C, bevorzugt unterhalb von 1350 °C oder unterhalb von 1330 °C, noch mehr bevorzugt unterhalb von 1300 °C oder unterhalb von 1250 °C. Diese Temperaturen bewirken, dass der Andalusit seine Eigenschaften bewahrt.

Die Chargenbehälter benötigen eine Form, die für die Herstellung der Kathodenmaterialien geeignet ist. Die Pulver werden daher zunächst geformt und bevorzugt mit Druck verfestigt. Hierzu ist ein Druck von mindestens 10 MPa, bevorzugt 20 MPa bevorzugt.

Gegenstand der Erfindung ist auch ein Chargenbehälter zum Kalzinieren von lithiumhaltigen Kathodenaktivmaterialen, der durch das erfindungsgemäße Verfahren erhältlich ist. Dieser umfasst mindestens 40 MA.-% Andalusit.

Gegenstand der Erfindung ist auch die Verwendung von Andalusit als Bestandteil eines Chargenbehälter zum Kalzinieren von lithiumhaltigen Kathodenaktivmaterialen.

Die Erfindung durch die folgenden Beispiele näher erläutert:

### Beispiele:

### Ausgangstoffe:

| **Rohstoffe** | **Körnung [mm]** |
|---|---|
| Andalusit | 0-0,5 |
| Schmelzmullit | 0,12-0,25 |
| Tonerde LS | --- |
| Rohmagnesit | bis 0,044 |
| Luvomag H 002 | --- |
| Borrement | --- |
| Sinterspinell AR 78 | 0-0,5 |
| Ton Hymod Blue | --- |
| Ton ROKA 40 | --- |
| Durandal D 60 | 0-0,5 |
| Andalusit DIN 100 | 0-0,063 |
| Kerphalit KF 55 µm | --- |
| Ton RR 40 | --- |
| Ton ROKA 40 | --- |

Die Materialien ohne Körnungsangabe sind Feinstmaterialien.

### Durchgeführte Versuche

| **Versuch** | **0.** | | **2. (nicht erfindungsgemäß)** | | **3.0** | | **3.1** | |
|---|---|---|---|---|---|---|---|---|
| Rohstoffe | g | % | g | % | g | % | g | % |
| Andalusit | 3750,0 | 48,4% | --- | --- | 3750,0 | 48,8% | 3750,0 | 48,8% |
| Schmelzmullit | 1500,0 | 19,3% | 800,0 | 19,5% | --- | --- | --- | --- |
| Tonerde LS | 750,0 | 9,7% | 400,0 | 9,8% | 750,0 | 9,8% | 750,0 | 9,8% |
| Rohmagnesit | 225,0 | 2,9% | --- | --- | --- | --- | --- | --- |
| Luvomag H 002 | --- | --- | 80,0 | 2,0% | 150,0 | 2,0% | 150,0 | 2,0% |
| Borrement | 30,0 | 0,4% | 16,0 | 0,4% | 30,0 | 0,4% | 30,0 | 0,4% |
| Sinterspinell AR 78 | --- | --- | --- | --- | 1500,0 | 19,5% | 1125,0 | 14,6% |
| Ton Hymod Blue | 375,0 | 4,8% | --- | --- | --- | --- | --- | --- |
| Ton ROKA 40 | --- | --- | 200,0 | 4,9% | 375,0 | 4,9% | 375,0 | 4,9% |
| Durandal D 60 | --- | --- | 2000,0 | 48,8% | --- | --- | --- | --- |
| **STOPP** - **Wasser + Mischen** | | | | | | | | |
| Andalusit DIN 100 | 375,0 | 4,8% | --- | --- | --- | --- | --- | --- |
| Sinterspinell AR 78 | --- | --- | --- | --- | --- | --- | 375,0 | 4,9% |
| Kerphalit KF 55 µm | --- | --- | 200,0 | 4,9% | 375,0 | 4,9% | 375,0 | 4,9% |
| **STOPP** - **Mischen** | | | | | | | | |
| Ton RR 40 | 750,0 | 9,7% | --- | --- | --- | --- | --- | --- |
| **Ton ROKA 40** | --- | --- | 400,0 | 9,8% | 750,0 | 9,8% | 750,0 | 9,8% |
| **ENTLEEREN UND MISCHEN** | | | | | | | | |
| Summe | 7755 | 100% | 4096 | 100% | 7680 | 100% | 7680 | 100% |
| Wasser | **330** | **4,26%** | **176** | **4,30%** | **330** | **4,30%** | **330** | **4,30%** |
| | | | | | | | | |
| Massefeuchte [Gew.%] | 4,95 | | 4,75 | | 4,81 | | 4,57 | |
| Schüttdichte [g/cm³] | 1,111 | | 1,299 | | 1,149 | | 1,124 | |
| Füllfaktor [GD/SD] | 2,488 | | 2,018 | | 2,313 | | 2,334 | |
| Pressdruck [MPa] | **30 (6000 kp)** | | **30 (6000 kp)** | | **30 (6000 kp)** | | **30 (6000 kp)** | |
| Gewicht grün [g] | 274,00 | | 280,00 | | 274,00 | | 275,00 | |
| Höhe grün [mm] | 50,17 | | 54,10 | | 52,10 | | 53,00 | |
| Durchmesser grün [mm] | 50,15 | | 50,15 | | 50,19 | | 50,19 | |
| Gründichte [g/cm³] | **2,76** | | **2,62** | | **2,66** | | **2,62** | |
| Trockengründichte [g/cm³] | 2,63 | | 2,50 | | 2,53 | | 2,50 | |
| Gründruckfestigkeit [MPa] | **2,98** | | **2,14** | | **2,93** | | **2,80** | |

| **Versuch** | **0.** | | **2.** (nicht erfindungsgemäß) | | **3.0** | | **3.1** | |
|---|---|---|---|---|---|---|---|---|
| Brenntemperatur | **1280 °C** | **1350 °C** | **1280 °C** | **1350 °C** | **1280 °C** | **1350 °C** | **1280 °C** | **1350 °C** |
| Durchmesser grün [mm] | 50,15 | | 50,15 | | 50,19 | | 50,19 | |
| Durchmesser gebr. [mm] | 50,25 | 50,29 | 50,36 | 50,43 | 50,36 | 50,40 | 50,37 | 50,44 |
| Schwindung [%] | -0,20 | -0,28 | -0,42 | -0,56 | -0,34 | -0,42 | -0,36 | -0,50 |
| | | | | | | | | |
| Rohdichte [g/cm³] | 2,50 | 2,50 | 2,41 | 2,41 | 2,46 | 2,45 | 2,41 | 2,41 |
| Wasseraufnahme [Gew.%] | 7,25 | 6,89 | 9,22 | 9,01 | 8,85 | 8,64 | 9,58 | 9,47 |
| offene Porosität [Vol.%] | 18,11 | 17,20 | 22,26 | 21,10 | 21,74 | 21,20 | 23,14 | 22,82 |
| KDF [N/mm²] | 139 | 192 | 50 | 60 | 101 | 121 | 86 | 92 |
| WAK [*10⁻⁶/K] | 5,514 | 5,413 | 5,290 | 5,095 | 5,465 | 5,365 | 5,404 | 5,098 |
| US [km/s] | 3,21 | 3,92 | 1,56 | 2,03 | 2,11 | 2,63 | 1,78 | 1,65 |
| E-Modul (aus US) [N/mm²] | 25.760 | 38.416 | 5.865 | 9.931 | 10.952 | 16.946 | 7.636 | 6.561 |
| R 1 (Wärmesp.) [K] | 104,55 | 99,03 | 170,94 | 126,83 | 180,26 | 142,71 | 222,52 | 294,37 |

### Messung der Beständigkeit

In Laborversuchen wurden Chargenbehälter aus dem Versuch 3.0 geformt und das Verhalten beim Kalzinieren von Kathodenmaterial untersucht. Abplatzungen des Chargenmaterials führen zu Verunreinigungen des Kathodenmaterials. Der Gehalt an Verunreinigungen ist daher ein Maß für die Qualität der Chargenbehälter. Als Vergleich diente ein kommerzielles Muster.

| | **Versuch 3.0** | | **Stand der Technik** | |
|---|---|---|---|---|
| | Nach dem 1. Durchgang | Nach dem 6. Durchgang | Nach dem 1. Durchgang | Nach dem 6. Durchgang |
| Anteil in % an keramischen Verunreinigungen (Al₂O₃, SiO₂, Fe₂O₃, CaO, K₂O, Na₂O) | 0,25 | 0,16 | 1,46 | 2,92 |

## Patentansprüche

1. Verfahren zur Herstellung eines Chargenbehälters zum Kalzinieren von lithiumhaltigen Kathodenaktivmaterial umfassend das Formen und Sintern von
- 40 bis 70 MA.-% Andalusit
- 5 bis 20 MA.-% Tonerde
- 0 bis 25 MA.-% Schmelzmullit
- 0 bis 25 MA.-% Sinterspinell
- 0 bis 15 MA.-% weitere Mineralien
bei Temperaturen unterhalb von 1370 °C.

2. Verfahren nach Anspruch 1, wobei die Menge an Andalusit 45 bis 55 MA.- % beträgt.

3. Verfahren nach Anspruch 1 oder 2, wobei der Andalusit eine d50ᵥₒₗ Korngröße kleiner 1 mm oder kleiner 0,5 mm aufweist.

4. Verfahren nach einem der Ansprüche 1 bis 3, wobei die Menge an Schmelzmullit 0 bis 15 MA% beträgt.

5. Verfahren nach einem der Ansprüche 1 bis 4, wobei die weiteren Mineralien ausgewählt werden aus Ton, Magnesit, Magnesiumoxid.

6. Verfahren nach einem der Ansprüche 1 bis 5, wobei das Sintern bei Temperaturen unterhalb von 1350 °C oder unterhalb von 1.250 °C erfolgt.

7. Verfahren nach einem der Ansprüche 1 bis 6, wobei das Formen mit einem Druck von mindestens 10 MPa erfolgt.

8. Chargenbehälter zum Kalzinieren von lithiumhaltigen Kathodenaktivmaterial erhältlich durch das Verfahren nach einem der Ansprüche 1 bis 7.

9. Chargenbehälter zum Kalzinieren von lithiumhaltigen Kathodenaktivmaterial umfassend mindestens 40 MA.-% Andalusit.

10. Verwendung von Andalusit als Bestandteil eines Chargenbehälters zum Kalzinieren von lithiumhaltigen Kathodenaktivmaterial
